# EUROPEAN PATENT APPLICATION

(11) **EP 1 701 515 A1**
(43) Date of publication of application: **13.09.2006**
(21) Application number: 05290536.1
(22) Date of filing: 08.03.2005
(51) Int. Cl.: H04L 29/12, H04L 12/46

(54) **System and method for translation of Virtual LAN Identifiers**

(71) Applicant: ALCATEL, 75008 Paris (FR)
(72) Inventor: Cautereels, Paul Henri Marie, 2880 Hingene (BE); Gyselings, Tim, 2100 Deurne (BE); Kiss, Lajos, 2610 Wilrijk (BE)
(74) Representative: Narmon, Gisèle Marie Thérèse

(57) **Abstract**

Systems comprising aggregation equipment (1) and remote equipment (2-3) for exchanging messages between a subscriber unit (4,5,6,7,8,9) of the subscriber equipment (4-9) and the aggregation equipment (1) via a remote unit (2,3) of the remote equipment (2-3) are provided with translation equipment (12) for translating at least one virtual local area network identifier in at least one of the messages. As a result, it is no longer necessary to configure the remote equipment (2-3) to distribute the available virtual local area network identifiers among the remote equipment (2-3). A generator (44) generates translations of virtual local area network identifiers in a static way, to distribute the available virtual local area network identifiers among possible messages coming from the remote units (2,3), or in a dynamic way, to distinguish messages comprising the same virtual local area network identifier and coming from different subscriber units (4,7) and arriving via different remote units (2,3) at the same piece of aggregation equipment (1).

## Description

The invention relates to a system comprising aggregation equipment and remote equipment, which remote equipment is coupled to the aggregation equipment and which remote equipment is to be coupled to subscriber equipment for exchanging messages between the subscriber equipment and the aggregation equipment via the remote equipment.
The aggregation equipment for example comprises a switch or a router coupled to a core network. The remote equipment for example comprises several remote units such as several digital subscriber line access multiplexers all coupled to the switch or the router. The subscriber equipment for example comprises groups of subscriber units such as modems or personal computers. Each remote unit is coupled to a group of subscriber units. The core network is for example based on an Ethernet technology or on an Asynchronous Transfer Mode technology. Between the aggregation equipment and the remote equipment, a Virtual Local Area Network technology is used. Between the remote equipment and the subscriber equipment, for example an Asymmetric Digital Subscriber Line technology or an Integrated Service Digital Network technology is used.

A prior art system is of common general knowledge. The remote units are arranged to allocate virtual local area network identifiers to messages originating from the subscriber units and destined for the switch or the router. To avoid that, in the router or the switch, the same virtual local area network identifier is used in messages from different subscriber units, each remote unit has its own unique group of virtual local area network identifiers. Thereto, the remote units need to be configured to distribute the available virtual local area network identifiers among the remote units.
The known system is disadvantageous, inter alia, owing to the fact that the remote units need to be configured to distribute the available virtual local area network identifiers among the remote units, before the messages can be exchanged. This makes the known system relatively inflexible. A remote unit having a malfunction can only be replaced by an other remote unit after this other remote unit has been configured in correspondence with the remote unit having the malfunction.
It is an object of the invention, inter alia, to provide a system as defined in the preamble which is relatively flexible.
The system according to the invention is characterized in that the system further comprises translation equipment for translating at least one virtual local area network identifier in at least one of the messages.
By introducing the translation equipment, the virtual local area network identifiers in the messages can be translated. As a result, it is no longer necessary to configure the remote units to distribute the available virtual local area network identifiers among the remote units, before the messages can be exchanged. And it is no longer necessary to interrupt the exchanging of messages for re-configuring the remote units for re-distributing the available virtual local area network identifiers among the remote units. This all makes the system according to the invention more flexible. A remote unit having a malfunction can now be replaced by an other remote unit, without any (re-)configuring needing to be done.
The system according to the invention is further advantageous, inter alia, in that the remote equipment no longer needs to be configurable for distributing the available virtual local area network identifiers among the remote units. Generally, the translation equipment will be located in the aggregation equipment, without excluding other locations.
US 2002/0087721 discloses a duplicate private address translating system and duplicate address network system for translating addresses. This system uses virtual local area network tags for making proper address translations. US 2002/0146002 discloses a network administration apparatus for allocating virtual local area network tags to ports or subscribers. US 2003/0189905 discloses a method of setting network configuration and device and system thereof for allocating virtual local area network tags in dependence of port information or medium access control address information. US 2004/0218538 discloses a site-to-site dynamic virtual local area network for implementing virtual local area networks. US 2004/0255154 discloses a multiple tiered network security system. None of these prior art documents discloses translation equipment for translating at least one virtual local area network identifier in at least one message.
An embodiment of the system according to the invention is characterized in that the system further comprises a generator for generating translations of virtual local area network identifiers.

By introducing the generator, the translations of the virtual local area network identifiers can be generated. Such a generator for example comprises a table memory with, per row, for example in a first column, a virtual local area network identifier to be translated, and, for example in a second column, an interface identifier, and, for example in a third column, a translation of the virtual local area network identifier to be translated. In this case, the translation is generated in dependence of the virtual local area network identifier to be translated and the interface identifier. In other words, by searching a row for a proper virtual local area network identifier to be translated in the first column and for a proper interface identifier in the second column, in the same row in the third column the translation will be found. The generator may be located in the translation equipment, without excluding other locations. Other embodiments of the generator that do not comprise the table memory are not to be excluded either.
An embodiment of the system according to the invention is characterized in that the generator is arranged to generate the translations in a static way.
In this case, the generator will need to be configured, for example by an operator, not to distribute the available virtual local area network identifiers among the remote units, but to distribute the available virtual local area network identifiers among possible messages coming from the remote units. The generator is usually located at a centralized location, and the remote units are usually located at decentralized locations. Configuring processes at centralized locations are to be preferred to configuring processes at decentralized locations.
An embodiment of the system according to the invention is characterized in that the remote equipment comprises a first remote unit and a second remote unit, the first remote unit being arranged to use at least a group of virtual local area network identifiers and the second remote unit being arranged to use at least the same group of virtual local area network identifiers, and the translation equipment being arranged to translate the group of virtual local area network identifiers used by the first remote unit into a different group of virtual local area network identifiers not used by the second remote unit for distinguishing messages originating from the subscriber equipment and arriving via different remote units and destined for the aggregation equipment from each other.
By arranging the remote units to use the same group of virtual local area network identifiers and by arranging the translation equipment to translate a group of virtual local area network identifiers used by one of the remote units into a different group of virtual local area network identifiers not used by the other remote unit(s), messages originating from the subscriber equipment and arriving via different remote units and destined for the aggregation equipment can easily be distinguished from each other.
An embodiment of the system according to the invention is characterized in that the generator is arranged to generate the translations in a dynamic way.
In this case, the generator does not necessarily need to be configured. This time, the available virtual local area network identifiers do not need to be distributed among the remote units, and the available virtual local area network identifiers do not need to be distributed among the possible messages coming from the remote units. The translations are only generated to distinguish messages comprising the same virtual local area network identifier and coming from different subscriber units and arriving via different remote units at the same piece of aggregation equipment. Only active subscriber units require a virtual local area network identifier, inactive subscriber units do not need such a virtual local area network identifier, even not when being coupled to a port of a remote unit. This results in a more efficient use of the available virtual local area network identifiers. The generator for example again comprises a table memory with, per row, for example in a first column, a virtual local area network identifier to be translated, and, for example in a second column, an interface identifier, and, for example in a third column, a translation of the virtual local area network identifier to be translated, whereby now the translation can be selected arbitrarily as long as the translation of the virtual local area network identifier does not coincide with a virtual local area network identifier which is in use.
An embodiment of the system according to the invention is characterized in that the subscriber equipment comprises a first subscriber unit and a second subscriber unit and the remote equipment comprises a first remote unit to be coupled to the first subscriber unit and a second remote unit to be coupled to the second subscriber unit, the first remote unit being arranged to use a virtual local area network identifier on behalf of the first subscriber unit and the second remote unit being arranged to use the same virtual local area network identifier on behalf of the second subscriber unit, and the translation equipment being arranged to translate the virtual local area network identifier used by the first remote unit on behalf of the first subscriber unit into a different virtual local area network identifier not used by the second remote unit on behalf of the second subscriber unit for distinguishing messages originating from active subscriber units and arriving via different remote units and destined for the aggregation equipment from each other.

By arranging the remote units to use the same virtual local area network identifier on behalf of different subscriber units and by arranging the translation equipment to translate the virtual local area network identifier used by one of the remote units on behalf of one of the subscriber units into a different virtual local area network identifier not used by the other remote unit(s) on behalf of the other subscriber unit(s), messages originating from active subscriber units and arriving via different remote units and destined for the aggregation equipment can easily be distinguished from each other.
The invention also relates to aggregation equipment for use in a system further comprising remote equipment, which remote equipment is to be coupled to the aggregation equipment and which remote equipment is to be coupled to subscriber equipment for exchanging messages between the subscriber equipment and the aggregation equipment via the remote equipment, which aggregation equipment according to the invention is characterized in that the aggregation equipment comprises translation equipment for translating at least one virtual local area network identifier in at least one of the messages.
The invention yet also relates to translation equipment for use in a system comprising aggregation equipment and remote equipment, which remote equipment is coupled to the aggregation equipment and which remote equipment is to be coupled to subscriber equipment for exchanging messages between the subscriber equipment and the aggregation equipment via the remote equipment, which translation equipment according to the invention is characterized in that the system further comprises the translation equipment for translating at least one virtual local area network identifier in at least one of the messages.
The invention further relates to a method for use in a system comprising aggregation equipment and remote equipment, which remote equipment is coupled to the aggregation equipment and which remote equipment is to be coupled to subscriber equipment for exchanging messages between the subscriber equipment and the aggregation equipment via the remote equipment, which method according to the invention is characterized in that the method comprises the step of translating at least one virtual local area network identifier in at least one of the messages.
The invention yet further relates to a processor program product for use in a system comprising aggregation equipment and remote equipment, which remote equipment is coupled to the aggregation equipment and which remote equipment is to be coupled to subscriber equipment for exchanging messages between the subscriber equipment and the aggregation equipment via the remote equipment, which processor program product according to the invention is characterized in that the processor program product comprises the function of translating at least one virtual local area network identifier in at least one of the messages.
Embodiments of the aggregation equipment according to the invention and of the translation equipment according to the invention and of the method according to the invention and of the processor program product according to the invention correspond with the embodiments of the system according to the invention.
The invention is based upon an insight, inter alia, that individually configurable remote units are not to be preferred, and is based upon a basic idea, inter alia, that individually configurable remote units can be avoided by introducing translation equipment for translating at least one virtual local area network identifier.
The invention solves the problem, inter alia, to provide a system as defined in the preamble which is relatively flexible, and is further advantageous, inter alia, in that the remote equipment no longer needs to be configurable for distributing the available virtual local area network identifiers among the remote units.
These and other aspects of the invention will be apparent from and elucidated with reference to the embodiments(s) described hereinafter.

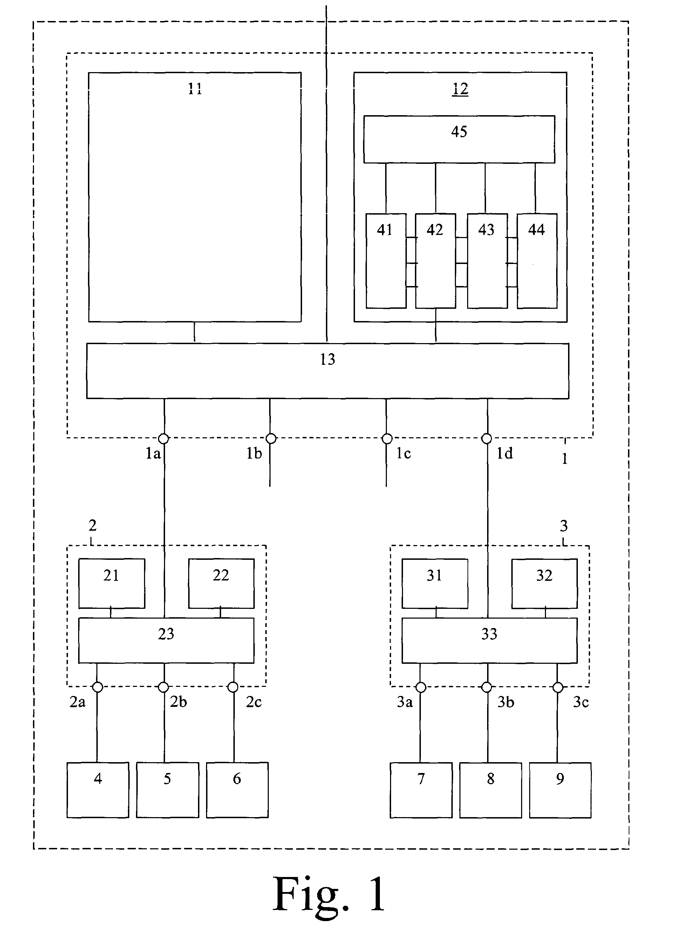

Fig. 1 shows diagrammatically a system according to the invention comprising aggregation equipment according to the invention.

The system according to the invention shown in Fig. 1 comprises aggregation equipment 1 coupled to remote equipment 2-3, which remote equipment 2-3 is to be coupled to subscriber equipment 4-9 for exchanging messages between the subscriber equipment 4-9 and the aggregation equipment 1 via the remote equipment 2-3. The aggregation equipment 1 such as for example a router or a switch comprises a coupler 13 coupled to ports 1a-1d of the aggregation equipment 1 and coupled to control equipment 11 and to translation equipment 12 and to a core network not shown. The translation equipment 12 comprises a buffer 42 coupled to the coupler 13, a detector 41 coupled to the buffer 42, a translator 43 coupled to the buffer 42, a generator 44 coupled to the translator 43 and a processor 45 coupled to the detector 41, the buffer 42, the translator 43 and the generator 44.

The remote equipment 2-3 comprises a first remote unit 2 and a second remote unit 3 such as digital subscriber line access multiplexers. The first remote unit 2 comprises a coupler 23 coupled to ports 2a-2c of the first remote unit 2 and coupled to a controller 21 and to an allocator 22 and to the port 1a. The second remote unit 3 comprises a coupler 33 coupled to ports 3a-3c of the second remote unit 3 and coupled to a controller 31 and to an allocator 32 and to the port 1d.
The subscriber equipment 4-9 comprises subscriber units 4,5,6,7,8,9 such as modems or personal computers. A first group of respective subscriber units 4-6 is coupled to the respective ports 2a-2c, and a second group of respective subscriber units 7-9 is coupled to the respective ports 3a-3c.
The core network is for example based on an Ethernet technology or on an Asynchronous Transfer Mode technology. Between the aggregation equipment 1 and the remote equipment 2-3, a Virtual Local Area Network technology is used. Between the remote equipment 2-3 and the subscriber equipment 4-9, for example an Asymmetric Digital Subscriber Line technology or an Integrated Service Digital Network technology is used.
According to the prior art, the translation equipment 12 is not present, and the allocator 22 is for example configured by for example an operator to distribute the virtual local area network identifiers 2A-2C among the ports 2a-2c, and the allocator 32 is for example configured by for example an operator to distribute the virtual local area network identifiers 3A-3C among the ports 3a-3c. As a result, messages coming from the respective subscriber units 4-6 get the respective virtual local area network identifiers 2A-2C, and messages coming from the respective subscriber units 7-9 get the respective virtual local area network identifiers 3A-3C, before these messages are being forwarded in an upstream direction to the aggregation equipment 1. This configuring of the remote units 2,3 is disadvantageous, and is no longer necessary in the system according to the invention, as discussed below.
According to the invention, the translation equipment 12 is introduced, for example into the aggregation equipment 1, for translating at least one virtual local area network identifier in at least one of the messages, as follows. The allocators 22 and 32 no longer need to be configured individually. Each allocator 22,32 for example distributes the virtual local area network identifiers 1A-1C among the ports 2a-2c,3a-3c. As a result, messages coming from the respective subscriber units 4-6 get the respective virtual local area network identifiers 1A-1C in the first remote unit 2, and messages coming from the respective subscriber units 7-9 get the same respective virtual local area network identifiers 1A-1C in the second remote unit 3, before these messages are being forwarded in an upstream direction to the aggregation equipment 1.
Owing to the fact that, of each pair of messages comprising the same virtual local area network identifier, the messages arrive via the different ports 1a and 1d, the aggregation equipment 1 is still capable of distinguishing these messages from each other, although both messages comprise the same virtual local area network identifier.
Each message arriving at the coupler 13 is for example supplied to the buffer 42 in the translation equipment 12 under control of the control equipment 11. The detector 41 detects the buffered message, for example by detecting the virtual local area network identifier in this message, under control of the processor 45. This processor 45 is informed by the control equipment 11, for example via a coupling not shown or via the coupler 13, of the port 1a or 1d used by the message to enter the aggregation equipment 1.
For example in a first case of a first message comprising the virtual local area network identifier 1B and having entered the aggregation equipment 1 via the port 1d (originating from the subscriber unit 8 via the second remote unit 3), the virtual local area network identifier 1B remains unchanged, and the message is forwarded in an upstream direction via the coupler 13 to the core network. For a second message comprising the same virtual local area network identifier 1B and having entered the aggregation equipment 1 via the port 1a (originating from the subscriber unit 5 via the first remote unit 2), the virtual local area network identifier 1B does not remain unchanged. Under control of the processor 45, the generator 44 generates the respective virtual local area network identifier 4B, and the translator 43 replaces the virtual local area network identifier 1B by the virtual local area network identifier 4B in the buffered message. Then the amended buffered message is forwarded in an upstream direction via the coupler 13 to the core network.
As a result, it is no longer necessary to configure the remote units 2,3 to distribute the available virtual local area network identifiers among the remote units 2,3, before the messages can be exchanged. The remote equipment 2-3 no longer needs to be configurable for distributing the available virtual local area network identifiers among the remote units 2,3. Each remote unit 2,3 can be identical to each other remote unit 2,3, which is a great advantage.
The generator 44 for example comprises a table memory with, per row, for example in a first column, a virtual local area network identifier to be translated, and, for example in a second column, an interface identifier, and, for example in a third column, a translation of the virtual local area network identifier to be translated. Other embodiments of the generator 44 are not to be excluded. The generator 44 for example generates the translations in a static way. In that case, the generator 44 will need to be configured, for example by an operator, not to distribute the available virtual local area network identifiers among the remote units 2,3, but to distribute the available virtual local area network identifiers among possible messages coming from the remote units 2,3. The translation equipment 12 and, more precisely, the generator 44 and the translator 43, are arranged to translate a group of respective virtual local area network identifiers 1A-1C used by the first remote unit 2 into a different group of respective virtual local area network identifiers 4A-4C not used by the second remote unit 3 for distinguishing messages originating from the subscriber equipment 4-9 and arriving via different remote units 2,3 and destined for the aggregation equipment 1 from each other.
For example in a second case of a first message comprising the virtual local area network identifier 1A and having entered the aggregation equipment 1 via the port 1d (originating from the subscriber unit 7 via the second remote unit 3), the virtual local area network identifier 1A remains unchanged, and the message is forwarded in an upstream direction via the coupler 13 to the core network. For a second message comprising the same virtual local area network identifier 1A and having entered the aggregation equipment 1 via the port 1a (originating from the subscriber unit 4 via the first remote unit 2) at a moment in time at which the subscriber unit 7 is still active, the virtual local area network identifier 1A does not remain unchanged. Under control of the processor 45, the generator 44 generates the respective virtual local area network identifier 1B, and the translator 43 replaces the virtual local area network identifier 1A by the virtual local area network identifier 1B in the buffered message. Then the amended buffered message is forwarded in an upstream direction via the coupler 13 to the core network.
As a result, again it is no longer necessary to configure the remote units 2,3 to distribute the available virtual local area network identifiers among the remote units 2,3, before the messages can be exchanged. The remote equipment 2-3 no longer needs to be configurable for distributing the available virtual local area network identifiers among the remote units 2,3. Each remote unit 2,3 can be identical to each other remote unit 2,3, which is a great advantage. But this time, the available virtual local area network identifiers are not distributed among possible messages coming from the remote units 2,3, but the available virtual local area network identifiers are distributed among messages coming from the active subscriber units 4,7. This results in a more efficient use of the available virtual local area network identifiers.
The generator 44 for example again comprises a table memory with, per row, for example in a first column, a virtual local area network identifier to be translated, and, for example in a second column, an interface identifier, and, for example in a third column, a translation of the virtual local area network identifier to be translated, whereby now the translation can be selected arbitrarily as long as the translation of the virtual local area network identifier does not coincide with a virtual local area network identifier which is in use. Other embodiments of the generator 44 are not to be excluded. The generator 44 for example generates the translations in a dynamic way. In that case, the generator 44 does not necessarily need to be configured, at least not the way described above. The available virtual local area network identifiers do not need to be distributed among the remote units 2,3, and the available virtual local area network identifiers do not need to be distributed among the possible messages coming from the remote units 2,3. The translations are only generated to distinguish messages comprising the same virtual local area network identifier and coming from different subscriber units 4,7 and arriving via different remote units 2,3 at the same piece of aggregation equipment 1. Only active subscriber units 4,7 require a virtual local area network identifier, inactive subscriber units do not need such a virtual local area network identifier, even not when being coupled to a port 1a-1d of a remote unit 2,3.
Therefore, for the second case, the generator 44 will need to be informed of the activity of the subscriber units 4,5,6,7,8,9. Thereto, an activity detector in the form of a timing mechanism can be used. In case a subscriber unit has sent a message that has got a specific virtual local area network identifier in a first predefined time-interval, then this subscriber-unit is considered to be active during this first predefined time-interval. For each following predefined time-interval, it must be checked whether this subscriber unit has sent at least one further message that has got the specific virtual local area network identifier. If not, this subscriber unit has obviously become inactive. Other activity detectors are not to be excluded, such as activity detectors for detecting session start and session stop messages etc. As soon as the subscriber unit is considered to be inactive, the specific virtual local area network identifier has become free to be used for messages from an other subscriber unit and/or for messages of an other session etc.
Generally, the translation equipment 12 will be located in the aggregation equipment 1, without excluding other locations, such as for example a location between the aggregation equipment 1 and the remote units 2,3, or a location in a remote unit 2,3. The generator 44 may be located in the translation equipment 12, without excluding other locations, such as for example an other location inside or outside the aggregation equipment 1. Other embodiments of the generator 44 not comprising the table memory but for example comprising a converter for converting virtual local area network identifiers etc. or comprising a calculator for calculating virtual local area network identifiers etc. are not to be excluded either.
Of course, for messages flowing in a downstream direction from the aggregation equipment 1 via the remote units 2,3 to the subscriber units 4,5,6,7,8,9, opposite measures need to be taken. Thereto, a further translator not shown for performing opposite or inverse translations (in view of the translations performed by the translator 43) and a further generator not shown for performing opposite or inverse generations (in view of the generations performed by the generator 44) may be introduced. Such further translators and such further generators may coincide with the translators and the generators, partly or entirely.
The couplers 13,23,33 may comprise buffers not shown, small switches not shown, small routers not shown, small bridges not shown, small forwarders not shown etc. The aggregation equipment 1 and the remote equipment 2,3 may comprise further couplers not shown. The translation equipment 12 may entirely or partly form part of the control equipment 11 and can be 100% hardware, 100% software or a mixture of both.
The expression "for" in for example "for exchanging", "for translating" and "for generating" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.
The steps/functions of translating do not exclude further steps/functions, like for example, inter alia, the steps/functions described for the Fig.

## Claims

1. System comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the system further comprises translation equipment (12) for translating at least one virtual local area network identifier in at least one of the messages.

2. System as defined in claim 1, **characterized in that** the system further comprises a generator (44) for generating translations of virtual local area network identifiers.

3. System as defined in claim 2, **characterized in that** the generator (44) is arranged to generate the translations in a static way.

4. System as defined in claim 3, **characterized in that** the remote equipment (2-3) comprises a first remote unit (2) and a second remote unit (3), the first remote unit (2) being arranged to use at least a group of virtual local area network identifiers and the second remote unit (3) being arranged to use at least the same group of virtual local area network identifiers, and the translation equipment (12) being arranged to translate the group of virtual local area network identifiers used by the first remote unit (2) into a different group of virtual local area network identifiers not used by the second remote unit (3) for distinguishing messages originating from the subscriber equipment (4-9) and arriving via different remote units (2,3) and destined for the aggregation equipment (1) from each other.

5. System as defined in claim 2, **characterized in that** the generator (44) is arranged to generate the translations in a dynamic way.

6. System as defined in claim 5, **characterized in that** the subscriber equipment (4-9) comprises a first subscriber unit (4) and a second subscriber unit (7) and the remote equipment (2-3) comprises a first remote unit (2) to be coupled to the first subscriber unit (4) and a second remote unit (3) to be coupled to the second subscriber unit (7), the first remote unit (2) being arranged to use a virtual local area network identifier on behalf of the first subscriber unit (4) and the second remote unit (3) being arranged to use the same virtual local area network identifier on behalf of the second subscriber unit (7), and the translation equipment (12) being arranged to translate the virtual local area network identifier used by the first remote unit (2) on behalf of the first subscriber unit (4) into a different virtual local area network identifier not used by the second remote unit (3) on behalf of the second subscriber unit (7) for distinguishing messages originating from active subscriber units (4,7) and arriving via different remote units (2,3) and destined for the aggregation equipment (1) from each other.

7. Aggregation equipment (1) for use in a system further comprising remote equipment (2-3), which remote equipment (2-3) is to be coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the aggregation equipment (1) comprises translation equipment (12) for translating at least one virtual local area network identifier in at least one of the messages.

8. Translation equipment (12) for use in a system comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the system further comprises the translation equipment (12) for translating at least one virtual local area network identifier in at least one of the messages.

9. Method for use in a system comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the method comprises the step of translating at least one virtual local area network identifier in at least one of the messages.

10. Processor program product for use in a system comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the processor program product comprises the function of translating at least one virtual local area network identifier in at least one of the messages.

## Amended claims

### Amended claims in accordance with Rule 86(2) EPC.

**1.** System comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the system further comprises translation equipment (12) for translating at least one virtual local area network identifier in at least one of the messages for distinguishing messages from each other that arrive via different remote units (2,3) of the remote equipment (2-3) and are destined for the aggregation equipment (1).

**2.** System as defined in claim 1, **characterized in that** the system further comprises a generator (44) for generating translations of virtual local area network identifiers for said translating.

**3.** System as defined in claim 2, **characterized in that** the generator (44) is arranged to generate the translations in a static way.

**4.** System as defined in claim 3, **characterized in that** the remote equipment (2-3) comprises a first remote unit (2) and a second remote unit (3), the first remote unit (2) being arranged to use at least a group of virtual local area network identifiers and the second remote unit (3) being arranged to use at least the same group of virtual local area network identifiers, and the translation equipment (12) being arranged to translate the group of virtual local area network identifiers used by the first remote unit (2) into a different group of virtual local area network identifiers not used by the second remote unit (3) for said distinguishing of the messages from each other that originate from the subscriber equipment (4-9) and that arrive via the different remote units (2,3) and are destined for the aggregation equipment (1).

**5.** System as defined in claim 2, **characterized in that** the generator (44) is arranged to generate the translations in a dynamic way.

**6.** System as defined in claim 5, **characterized in that** the subscriber equipment (4-9) comprises a first subscriber unit (4) and a second subscriber unit (7) and the remote equipment (2-3) comprises a first remote unit (2) to be coupled to the first subscriber unit (4) and a second remote unit (3) to be coupled to the second subscriber unit (7), the first remote unit (2) being arranged to use a virtual local area network identifier on behalf of the first subscriber unit (4) and the second remote unit (3) being arranged to use the same virtual local area network identifier on behalf of the second subscriber unit (7), and the translation equipment (12) being arranged to translate the virtual local area network identifier used by the first remote unit (2) on behalf of the first subscriber unit (4) into a different virtual local area network identifier not used by the second remote unit (3) on behalf of the second subscriber unit (7) for said distinguishing of the messages from each other that originate from active subscriber units (4,7) and that arrive via the different remote units (2,3) and are destined for the aggregation equipment (1).

**7.** Aggregation equipment (1) for use in the system as defined in claim 1 and further comprising the translation equipment (12).

**8.** Translation equipment (12) for use in the system as defined in claim 1.

**9.** Method for use in a system comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the method comprises the step of translating at least one virtual local area network identifier in at least one of the messages for distinguishing messages from each other that arrive via different remote units (2,3) of the remote equipment (2-3) and are destined for the aggregation equipment (1).

**10.** Processor program product for use in a system comprising aggregation equipment (1) and remote equipment (2-3), which remote equipment (2-3) is coupled to the aggregation equipment (1) and which remote equipment (2-3) is to be coupled to subscriber equipment (4-9) for exchanging messages between the subscriber equipment (4-9) and the aggregation equipment (1) via the remote equipment (2-3), **characterized in that** the processor program product comprises the function of translating at least one virtual local area network identifier in at least one of the messages for distinguishing messages from each other that arrive via different remote units (2,3) of the remote equipment (2-3) and are destined for the aggregation equipment (1).
